# EUROPEAN PATENT APPLICATION

(11) **EP 4 572 427 A1**
(43) Date of publication of application: **18.06.2025**
(21) Application number: 24210222.6
(22) Date of filing: 31.10.2024
(51) Int. Cl.: H04W 52/02, H04W 84/12

(54) **METHODS FOR POWER SAVE IN SOFT-AP MODE AND RELATED SYSTEMS AND APPARATUSES**

(30) Priority: 15.12.2023 US 202363610912 P
(71) Applicant: Apple Inc., Cupertino, CA 95014 (US)
(72) Inventor: KRISHNAN, Neelakantan Nurani, San Diego, California, 92121 (US); YONG, Su Khiong, Cupertino, California, 95014 (US); BOODANNAVAR, Veerendra, Cupertino, California, 95014 (US); KNECKT, Jarkko L., Cupertino, California, 95014 (US); LIU, Yong, Cupertino, California, 95014 (US); DOMINGUEZ, Charles F., Cupertino, California, 95014 (US); JIANG, Jinjing, Cupertino, California, 95014 (US); THAKUR, Sidharth R., Cupertino, California, 95014 (US); SHANI, Oren, Cupertino, California, 95014 (US); VERMA, Lochan, Cupertino, California, 95014 (US); WANG, Qi, Cupertino, California, 95014 (US); HEDAYAT, Ahmad Reza, Cupertino, California, 95014 (US); DASH, Debashis, Cupertino, California, 95014 (US)
(74) Representative: Simmons & Simmons

(57) **Abstract**

Embodiments herein include a method for selectively operating a software enabled access point (Soft-AP) in a low-power listen mode. In some embodiments, a Soft-AP may use a low-power listen mode with limited or no transmit capabilities to monitor a wireless medium when not actively engaged in transmission or reception of frames. The Soft-AP may activate a fully-capable mode when there is an upcoming frame transmission from a station.

## Description

### BACKGROUND

Wireless communication technology uses various standards and protocols to transmit data between an access point and a wireless communication device. Wireless communication system standards and protocols can include, for example, 3rd Generation Partnership Project (3GPP) Long Term Evolution (LTE) (e.g., 4G), 3GPP New Radio (NR) (e.g., 5G), and Institute of Electrical and Electronics Engineers (IEEE) 802.11 standard for Wireless Local Area Networks (WLAN) (commonly known to industry groups as Wi-Fi^{®}).

In the 802.11 standard for WLAN, an access point (AP) is a device that creates a wireless local area network (WLAN), or Wi-Fi^{®} network. It may be connected to a wired network, such as an Ethernet network, and provides wireless access to that network for other devices. A station is a device that is capable of being wirelessly connected to the AP to join the WLAN network. Stations can be laptops, smartphones, tablets, or any other device with a WLAN adapter.

APs and stations communicate with each other using the Wi-Fi^{®} protocol. Various protocols have been established to increase security over a wireless communication network. For example, Simultaneous Authentication of Equals is the core authentication protocol of WP A3-Personal, and is mandated to be supported by all Wi-Fi^{®} Alliance certified devices, including both access points (APs) and non-AP stations (STAs).

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 illustrates an example timeline of a conventional operation of a Soft-AP in accordance with some embodiments.
FIG. 2 illustrates an example timeline of operation of a Soft-AP using a low-power listen mode in accordance with some embodiments.
FIG. 3 illustrates an example transmission timeline for a STA using MU-RTS as a wake-up indication when the low-power listen mode has limited transmission capabilities in accordance with some embodiments.
FIG. 4 illustrates an example case where the MU-RTS is used as a wake-up indication and the low-power listen mode of a Soft-AP is not capable of transmission in accordance with some embodiments.
FIG. 5 illustrates an example Soft-AP IE in accordance with some embodiments.
FIG. 6 illustrates an example frame exchange sequence for an unassociated STA where the Soft-AP can send an ACK frame in the low-power listen mode in accordance with some embodiments.
FIG. 7 illustrates an example frame exchange sequence for an unassociated STA where the low-power listen mode of the Soft-AP does not have transmit capabilities in accordance with some embodiments.
FIG. 8 illustrates an example format of an MU-RTS frame in accordance with some embodiments.
FIG. 9 illustrates an example frame exchange sequence using a wake-up frame in accordance with some embodiments.
FIG. 10 illustrates an example wake-up frame format in accordance with some embodiments.
FIG. 11 illustrates an example Soft-AP IE for a wake-up frame configuration in accordance with some embodiments.
FIG. 12 illustrates an example scenario where a STA is in a pre-associated state in accordance with some embodiments.
FIG. 13 illustrates an example of a system for performing signaling between a wireless device and a network device, according to embodiments disclosed herein.
FIG. 14 illustrates an example method for a Soft-AP in accordance with some embodiments.
FIG. 15 illustrates an example method for a STA in accordance with some embodiments.

### DETAILED DESCRIPTION

Wireless communication technology uses various standards and protocols to transmit data between an access point and a wireless communication device. One standard that is used for wireless communication is Institute of Electrical and Electronics Engineers (IEEE) 802.11 standard for Wireless Local Area Networks (WLAN) (commonly known to industry groups as Wi-Fi^{®}). Wi-Fi^{®} provides a convenient way to establish a network between devices. A device (e.g., a station) may connect to a Wi-Fi^{®} access point to join a network and connect to the internet wirelessly. Wi-Fi^{®} security is important to protect data and devices from unauthorized access.

Various embodiments are described with regard to a station (STA) and Access Point (AP). However, reference to a STA and AP is merely provided for illustrative purposes. The example embodiments may be utilized with any electronic component that may establish a connection to a network and is configured with the hardware, software, and/or firmware to exchange information and data with the network. Therefore, the STAs and APs as described herein are used to represent any appropriate electronic component.

In some instances, devices that are not built as a dedicated AP may be configured to act as a Soft-AP. A Soft-AP refers to a software enabled access point. For example, devices (e.g., phones, tablets, laptops, etc.), which are not built as wireless access points, may be configured to act like access points through software. This may also be referred to as a mobile hotspot.

However, as these devices are not built as dedicated APs, there are competing design principles at play. Two competing principles for Soft-AP operation include: 1) Wi-Fi station devices (STA) expect a Soft-AP to be always available with maximum advertised channel bandwidth and data rates; and 2) Soft-AP devices are typically battery operated. It is desirable to minimize Wi-Fi power consumption in Soft-AP mode to mitigate impact to device battery life, but the Wi-Fi station devices expect a large channel bandwidth. These two objectives conflict with each other. Additionally, the Soft-AP device may be providing a network connection with devices from different vendors and capabilities.

Accordingly, embodiments herein provide solutions to enable *power-save for Soft-AP* while interoperating with a variety of STA devices. In some embodiments, a new baseline operating mode for Soft-AP devices is defined. In some embodiments, new methods to support operation of Soft-AP with various Wi-Fi STA devices is defined. For example, systems may use Multi-User Request-to-Send (MU-RTS) frame, and/or a newly defined "wake-up" frame.

Reducing power consumption of a Soft-AP can bring several benefits in terms of energy efficiency and overall performance. For example, by decreasing power consumption, a Soft-AP becomes more energy-efficient, which helps in reducing overall operational costs and minimizing environmental impact. Further, in cases where the Soft-AP is running on a battery-powered device, reducing power consumption can significantly extend the battery life. This is crucial in applications such as wireless routers, mobile hotspots, or portable devices, where long battery life is desired for enhanced user convenience and uninterrupted connectivity. Additionally, lower power consumption means less heat generated by the Soft-AP. This can lead to improved heat dissipation, reducing the risk of overheating and potential degradation of hardware components. It also enhances the overall reliability and lifespan of the device.

Some embodiments herein may include a Soft-AP that uses a low-power listen mode and a fully-capable mode. In the low-power listen mode, the Soft-AP may have limited or no transmission capabilities. Additionally, in the low-power listen mode, the Soft-AP may have limited receive capabilities as well. For instance, the Soft-AP may have limited channel bandwidth, data rates, frame formats, etc. for reception. In a fully-capable mode, the Soft-AP may have full radio frequency (RF) capabilities. In some embodiment, the Soft-AP may include one radio for fully-capable mode and another radio for low-power listen mode. In some embodiments, The Soft-AP may include a single radio that switches between fully-capable and low-power listen modes.

In some embodiments, a new baseline operating mode for Soft-AP devices may be used to reduce power consumption while maintaining functionality of the Soft-AP device. The baseline operating mode may employ the use of low-power listen mode in baseline operating principles for Soft-AP. For example, a Soft-AP may use a low-power listen mode to listen to the wireless medium, if the Soft-AP is not actively engaged in transmission or reception of Wi-Fi frames. The low-power listen mode is limited in its ability to transmit and receive Wi-Fi frames, support of channel bandwidths, and data rates. For example, the data rates may be affected by the low-power listen modes limited support of modulation and coding schemes (MCS), and number of spatial streams (NSS).

The low-power listen mode may be used to monitor the wireless medium during certain periods of time. The Soft-AP may switch to a fully-capable mode with full RF capabilities (e.g., channel bandwidth, data rates, number of spatial streams, etc.) during active transmission or reception of Wi-Fi frames. Accordingly, the use of the low-power listen mode may reduce the amount of time the Soft-AP uses the full radio and thereby reduce the overall power consumption. The Soft-AP may benefit from using the low-power listen mode. A low-power listen mode may be lower in power consumption compared to the fully-capable mode.

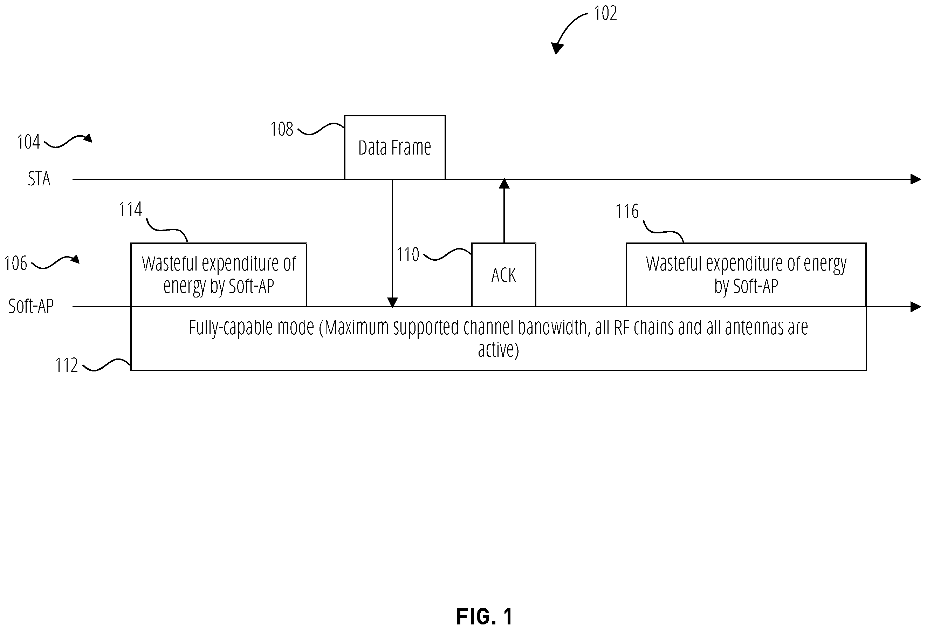

FIG. 1 illustrates an example timeline 102 of a conventional operation of a Soft-AP 106 in accordance with some embodiments. As shown, a STA 104 may be in communication with the Soft-AP 106. The STA 104 may send a data frame 108 to the Soft-AP 106. The Soft-AP 108 may receive the data frame 108 and send the STA 104 an acknowledgement (ACK) message 110 to the STA 104.

In the conventional operation of the Soft-AP 106, the Soft-AP 106 is always active 112 in the fully-capable mode with full RF capabilities. In other words, the maximum supported channel bandwidth, all RF chains, and antennas of the Soft-AP 106 remain active at all times. During time periods outside transmission and reception (e.g., first period 114 and second period 116), the Soft-AP 106 remains active for no reason. This results in wasteful expenditure of power resources. The amount of energy wasted may be substantial in situations where traffic from the STA 104 is sporadic and light, because the Soft-AP 106 remains fully active even when there is minimal data exchange.

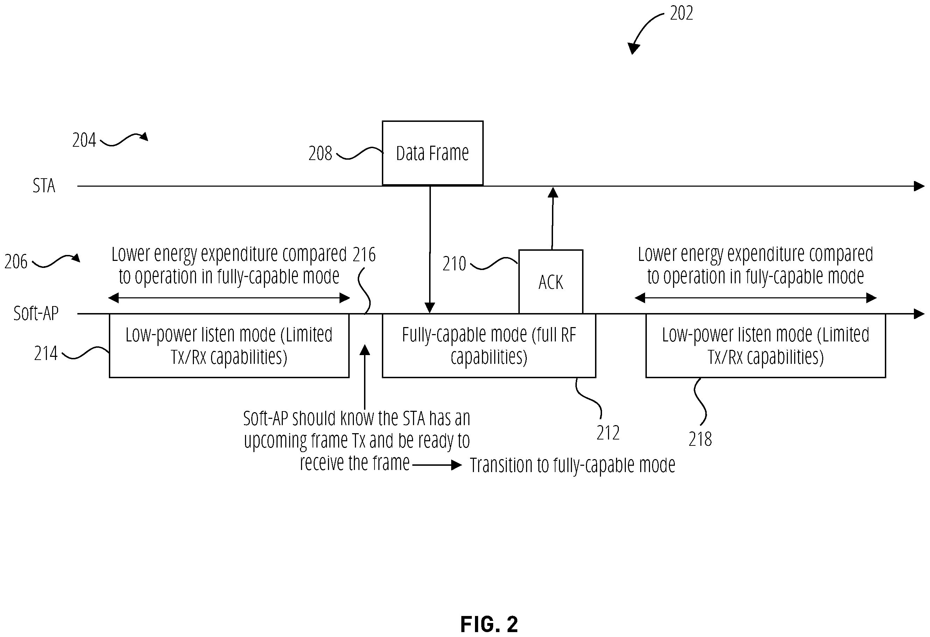

FIG. 2 illustrates an example timeline 202 of operation of a Soft-AP 206 using a low-power listen mode in accordance with some embodiments. As shown, a STA 204 may be in communication with the Soft-AP 206. The STA 204 may send a data frame 208 to the Soft-AP 206. The Soft-AP 206 may receive the data frame 208 and send the STA 204 an ACK message 210 to the STA 204.

During active transmission and reception, the Soft-AP 206 may be active in the fully-capable mode. That is, the Soft-AP may support full RF capabilities during periods of time (e.g., active period 212) where transmission and reception are expected. Further, the Soft-AP 206 may switch to operation in low-power listen mode if not actively engaged in transmission or reception of Wi-Fi frames. This switch to the low-power listen mode may result in a significant saving in Wi-Fi power/energy consumption.

For instance, in the illustrated example, the Soft-AP 206 may be in a low-power listen mode during a first period of time 214. In the low-power listen mode, the Soft-AP 206 may activate the low-power listen mode and deactivate the fully-capable mode. The low-power listen mode may have limited transmission/reception capabilities but may also have a lower energy expenditure compared to operation in the fully-capable mode.

The Soft-AP 206 may determine an activation point 216 when the STA 204 has an upcoming frame transmission (e.g., data frame 208). When the Soft-AP 206 determines that the STA 204 has an upcoming frame transmission, the Soft-AP 206 may bring up the fully-capable mode so that the Soft-AP 206 is active and ready to receive the frame with full RF capabilities. While the low-power listen mode may not have the capability to receive the data frame 208, the fully-capable mode does have that capability. Accordingly, by switching to the fully-capable mode from the low-power listen mode, the Soft-AP 206 is able to receive and respond to frames from the STA 204.

After the data frame 208 is received and the ACK message 210 is sent, the Soft-AP 206 may return to the low-power listen mode for a subsequent period of time 218. Once again, the low-power listen mode may use less power than the fully-capable mode resulting in lower energy expenditure. This may increase battery life of the Soft-AP 206.

In the illustrated embodiment, the baseline operation of the Soft-AP 206 is to be active in the low-power listen mode. The Soft-AP 206 opportunistically switches to the fully-capable mode operation when the Soft-AP 206 determines that there will be a frame sent from the STA 204. Outside of active transmission and reception periods, the Soft-AP 206 is active in the low-power listen mode. This may result in a significantly lower energy expenditure compared to the conventional operation of a Soft-AP as shown in FIG. 1.

To achieve switching between the low-power listen mode and the fully-capable mode, the Soft-AP 206 determines that there is an upcoming frame transmission. A key requirement for the proposed operation shown in FIG. 2 of Soft-AP 206 is the knowledge of an upcoming transmission from a STA. This knowledge enables the Soft-AP to be ready in fully-capable mode (with full RF capabilities) to receive the frame from the STA 204. The low-power listen mode is limited in its receiving capabilities and hence transitioning to the fully-capable mode is imperative to ensure that the Soft-AP 206 can receive frames from the STA 204. Knowledge of the upcoming frame transmission can be used by the Soft-AP 206 to switch to the fully-capable mode to be ready to properly decode the frame.

Soft-AP 206 knowledge of the upcoming frame may be gathered in a variety of ways. In some embodiments, two approaches for the STA 204 to indicate to Soft-AP 206 about an upcoming transmission of frames may include 1) use of MU-RTS frame; and 2) use of a newly-defined "Wake-up" frame. Embodiments herein describe the use of the MU-RTS frame or the wake-up frame, along with the entailed standards changes, for two phases. Some embodiments describe use of the MU-RTS frame or the wake-up frame where uplink data transmission is from an associated STA to a Soft-AP (e.g., a post-association phase). Some embodiments describe use of the MU-RTS frame or the wake-up frame where an STA is interested in associating with the Soft-AP (e.g., a pre-association phase).

In some embodiments, a STA may leverage the MU-RTS frame as a wake-up indication to the Soft-AP before the uplink data transmission from the STA. MU-RTS frame is a control frame defined in IEEE 802.1 1ax to enable medium reservation by a Wi-Fi AP for transmission to multiple STAs (uplink or downlink multi-user frames). In some embodiments herein, the STA may send an MU-RTS frame to inform the Soft-AP about the upcoming uplink frame transmission from the STA to the Soft-AP.

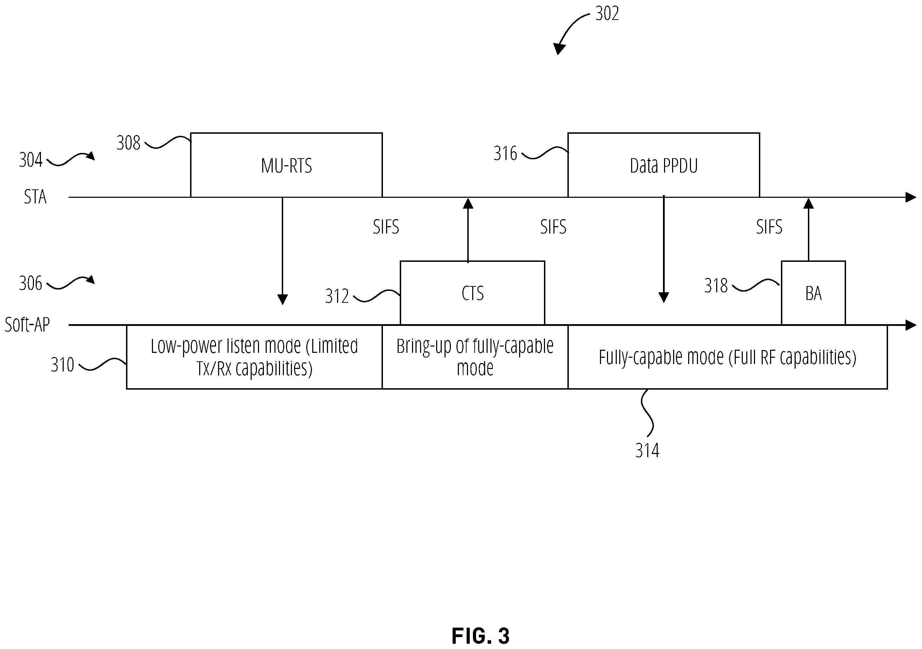

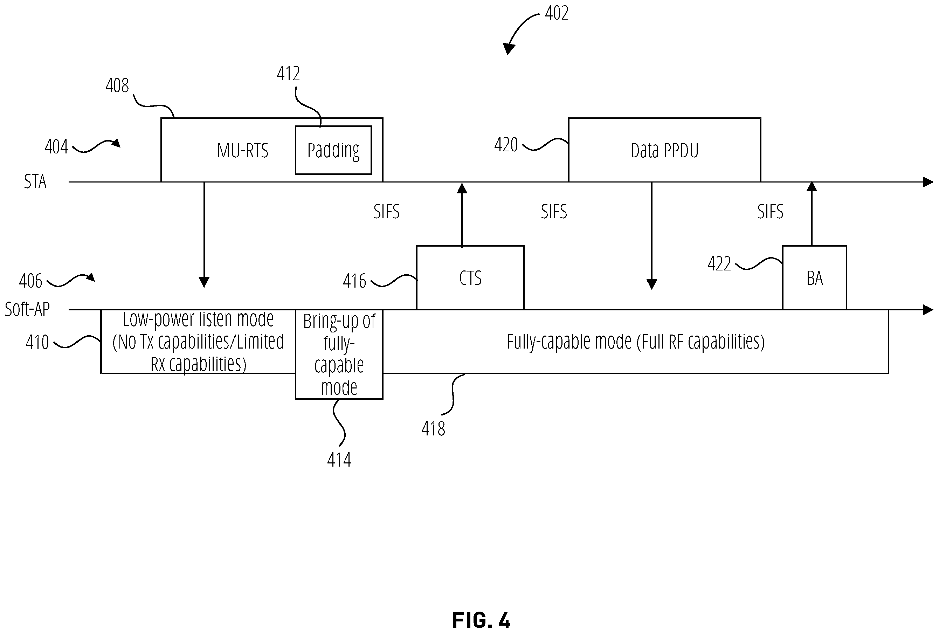

Currently, MU-RTS transmission is allowed for AP only. However, embodiments herein allow the STAs to send the MU-RTS frame as a wake-up indication. Some changes to the MU-RTS frame may facilitate the use of the MU-RTS frame as a wake-up indication. FIG. 3 and FIG. 4 illustrate two scenarios that are predicated on whether the low-power listen mode has transmit capabilities. The cases illustrated in FIG. 3 and FIG. 4 may be implemented by a Soft-AP based on the capabilities of the low-power listen mode of the Soft-AP.

For example, FIG. 3 illustrates an example transmission timeline 302 for a STA 304 using MU-RTS 308 as a wake-up indication when the low-power listen mode has limited transmission capabilities in accordance with some embodiments. As shown, the Soft-AP 306 may be active in the low-power listen mode during a first time period 310. The STA 304 may transmit an MU-RTS 308 during the first time period 310. The Soft-AP 306 may receive the MU-RTS 308 using the low-power listen mode.

The Soft-AP 306 can respond using the low-power listen mode. For example, the Soft-AP 306 operating in the low-power listen mode can send a clear-to-send (CTS) message 312 in response to MU-RTS 308. In parallel with sending the CTS message 312 in the low-power listen mode, the Soft-AP 306 can bring-up the fully-capable mode. The transition in parallel with sending the CTS message 312 may allow the Soft-AP 306 to activate the fully-capable mode with full RF capabilities by the time the STA 304 sends the data packet of interest. As shown in the second period of time 314, the Soft-AP 306 is active in the fully-capable mode and ready to receive a frame from the STA 304.

In response to receiving the CTS message 312, the STA 304 may send a data Physical Protocol Data Unit (PPDU) 316 to the Soft-AP 306. The Soft-AP 306 may receive and decode the data PPDU 316 using the fully-capable mode. The Soft-AP 306 may send a block ACK (BA) 318 to the STA 304. The BA 318 may indicate to the STA 304 that the data PPDU 316 was successfully received. After a transmission/reception period where the Soft-AP 306 uses the fully-capable mode, the Soft-AP 306 may transition back to the low-power listen mode.

Between consecutive transmission/reception periods there may be a short interframe space (SIFS). The SIFS defines a minimum duration between two consecutive frames (e.g., 16 microseconds). Using the low-power listen mode to transmit the CTS message 312 may allow for a condensed time period between initial transmission of the MU-RTS 308 and the data PPDU 316.

The ability to perform the transmission flow shown in FIG. 3 may be dependent on the capability of the Soft-AP. For example, the transmission flow may be applicable when the time for the Soft-AP 306 to bring-up the fully-capable mode is less than the CTS transmit duration plus 2 times the duration of the SIFS.

However, the complexity, cost, and power consumption of a low-power listen mode with limited transmission capabilities may not be desirable for all devices. Accordingly, there may be devices that serve as a Soft-AP with a low-power listen mode that does not support transmission. FIG. 4 illustrates an example case where the MU-RTS 408 is used as a wake-up indication and the low-power listen mode of a Soft-AP is not capable of transmission in accordance with some embodiments.

As shown in the illustrated transmission timeline 402, the Soft-AP 406 may be active in the low-power listen mode during a first time period 410. The STA 404 may transmit the MU-RTS 408 during the first time period 410. The Soft-AP 406 may receive the MU-RTS 408 using the low-power listen mode. Since the low-power listen mode is unable to transmit a response frame, the MU-RTS 408 from the STA 404 may be padded (e.g., padding 412) to allow time for the Soft-AP 406 to bring-up the fully-capable mode in Soft-AP during a second period of time 414.

The purpose of padding 412 may provide a period of time for the Soft-AP 406 to switch from the low-power listen mode to the fully-capable mode. In some embodiments, by the time the padding expires the Soft-AP 406 may have completed the transition from the low-power listen mode to the fully-capable mode. The Soft-AP 406 can respond using the fully-capable mode. The fully-capable mode can be used to send the CTS message 416 in response to MU-RTS 408. For instance, as shown in a third period of time 418, the Soft-AP 406 is active in the fully-capable mode which has full RF capabilities. The Soft-AP 406 sends the CTS message 416 in response to the MU-RTS 408 received in the low-power listen mode.

In response to receiving the CTS message 416, the STA 404 may send a data PPDU 420 to the Soft-AP 406. The Soft-AP 406 may receive and decode the data PPDU 420 using the fully-capable mode. The Soft-AP 406 may send a BA 422 to the STA 404. The BA 422 may indicate to the STA 404 that the data PPDU 420 was successfully received. After a transmission/reception period where the Soft-AP 406 uses the fully-capable mode, the Soft-AP 406 may transition back to the low-power listen mode.

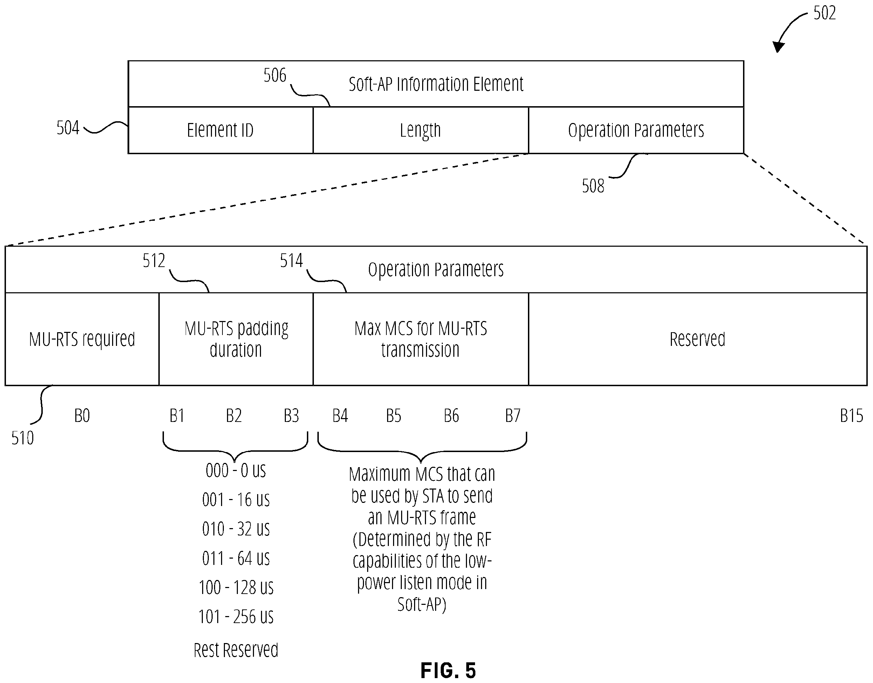

Embodiments herein implement changes to the MU-RTS. Current standards allow only Wi-Fi AP to send MU-RTS frames. Embodiments herein allow non-AP STAs to send MU-RTS frames. Additionally, an AP/Soft-AP may indicate additional information in a new information element. The new information element may be named Soft-AP information element (IE). For example, FIG. 5 illustrates an example Soft-AP IE 502 in accordance with some embodiments. The Soft-AP IE 502 may be included in beacons, and/or probe responses. The Soft-AP IE 502 may include an element ID 504, a length field 506, and operation parameters 508.

The element ID 504 may be used to uniquely identify the Soft-AP IE 502. The element ID 504 may be a numerical value assigned by the protocol specification. It may serve as a reference point for the sender and receiver to identify and interpret the specific information carried by the corresponding IE. The length field 506 may be used to specify the size or length of the data carried by the Soft-AP IE 502.

The operation parameters 508 may include configuration information for parameters associated with an MU-RTS sent by an STA. For example, the operation parameters 508 may include an MU-RTS required field 510, an MU-RTS padding duration field 512, and a Max MCS field 514. The MU-RTS required field 510 may be used by the Soft-AP to indicate whether the Soft-AP mandates that an STA always precedes its data transmission with an MU-RTS frame. The MU-RTS padding duration field 512 may be used by the Soft-AP to specify a padding duration for the MU-RTS frame. The padding duration may be based on the time required by the Soft-AP to bring-up fully-capable mode (e.g., the period of time to switch from the low-power listen mode to the fully-capable mode). The Max MCS field 514 may indicate the Max MCS for MU-RTS transmission.

In some embodiments, to indicate that the Soft-AP has a low-power listen mode that is capable of transmission (e.g., FIG. 3), the Soft-AP may set the MU-RTS padding duration field 512 to zero. The parameters (B1-B7) may depend on implementation. For example, a Soft-AP may support higher MCS and so may indicate that the STA may use up to MCS 11. In some embodiment, the STA may transmit a data PPDU only after it receives a CTS from the Soft-AP in response to the MU-RTS frame that it initially sent.

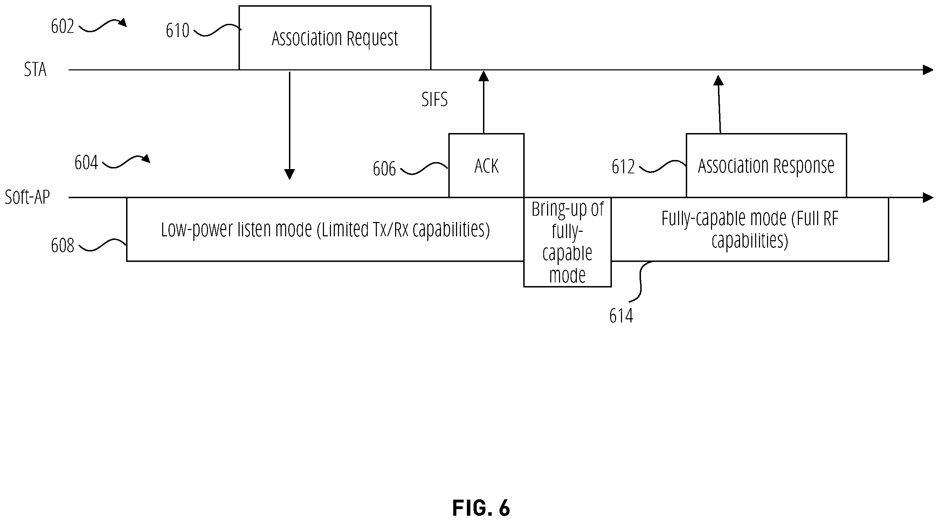

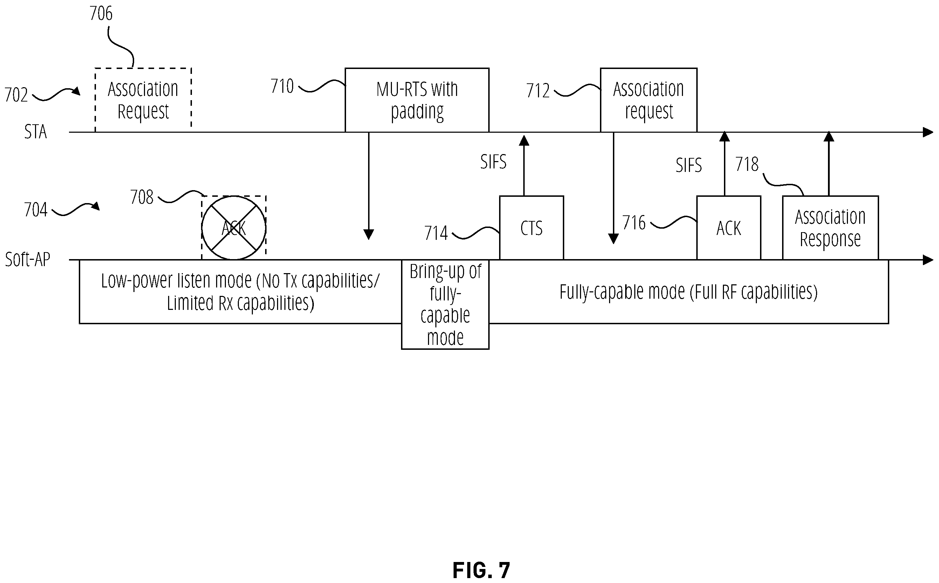

The illustrated transmission flows diagrams in FIG. 3 and FIG. 4 relate to cases where the STA and the Soft-AP have an initial association. FIG. 6 and FIG. 7 illustrates two cases where the STA wants to associate with the Soft-AP (e.g., pre-association). The use of the MU-RTS frame to facilitate association to a Soft-AP may be based on the capability of the low-power listen mode of the Soft-AP. Baseline operating mode of the Soft-AP may to be active in low-power listen mode with limited radio capabilities. FIG. 6 and FIG. 7 illustrate two scenarios are predicated on whether the low-power listen mode has transmit capabilities.

FIG. 6 illustrates an example scenario where a STA 602 wants to associate with a Soft-AP 604, and the Soft-AP 604 can send an ACK frame 606 in the low-power listen mode in accordance with some embodiments. As shown, the STA 602 may send an association request 610 to the Soft-AP 604. If this association request is received during a period of time 608 where the low-power listen mode is active and the fully-capable mode is deactivated, the Soft-AP 604 may still respond using the low-power listen mode's limited transmission capability.

Since the association request 610 is usually sent at basic data rates by the STA 602, the association request 610 can be decoded using the low-power listen mode. Further, the Soft-AP 604 can transmit an ACK frame 606, in response to the association request 610, from the Soft-AP 604 in the low-power listen mode. The Soft-AP 604 may bring up the fully-capable mode (e.g., active fully-capable mode period 614) to send a more complex association response frame 612 back to the STA 602.

FIG. 7 illustrates an example scenario where a STA 702 wants to associate with a Soft-AP 704, and the low-power listen mode of the Soft-AP 704 does not have transmit capabilities in accordance with some embodiments. Accordingly, the low-power listen mode cannot be used to send an ACK frame as the low-power listen mode has no transmit capabilities. This may lead to failures.

For example, in the illustrated embodiment when the STA 702 sends an association request 706 without first sending an MU-RTS, the Soft-AP may receive the association request 706 with the active low-power listen mode. However, the active low-power listen mode has no transmit capabilities and therefore cannot send an ACK frame 708. As the Soft-AP 704 cannot acknowledge the association request 706 received from the STA 702, there is a risk of block-listing of Soft-AP 706 by the STA 702 because of association failure(s). Accordingly, embodiment herein provide provisions to circumvent the issue of association failures and the subsequent block-listing of Soft-AP 704 by STA 702.

As previously discussed, the Soft-AP may indicate requirements for a STA to transmit MU-RTS 710 before frame exchanges in beacons or probe responses. The STA 702 would therefore be aware that the Soft-AP 704 is a special AP which needs all frame exchanges to be initiated with an MU-RTS. Accordingly, the STA 702 would honor the requirements of the beacons or probe responses by sending the MU-RTS 710 even for an association request 712.

The MU-RTS 710 may include padding to allow sufficient time for the Soft-AP 704 to activate the fully-capable mode. When the Soft-AP 704 switches from the low-power listen mode to the fully-capable mode, the Soft-AP 704 may use the fully-capable mode to transmit the CTS message 714 to the STA 702. In response to receiving the CTS message 714, the STA 702 may send the association request 712 to the Soft-AP 704. The Soft-AP 704 may receive and decode the association request 712. The STA 702 and the Soft-AP may proceed with the association procedure including the Soft-AP 704 sending an ACK message 716 and an association response 718 to the STA 702.

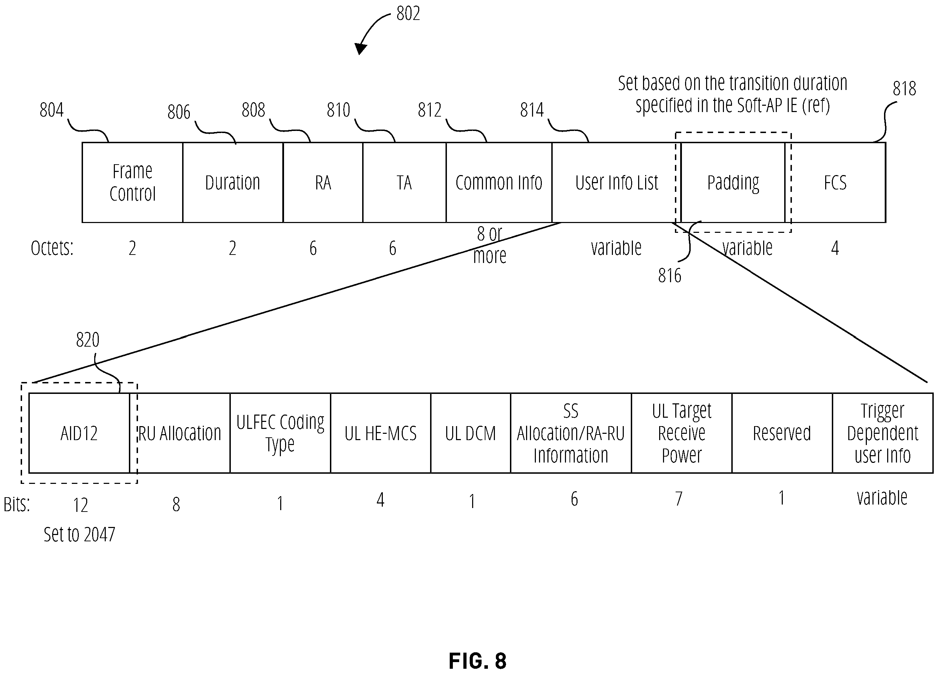

FIG. 8 illustrates an example format of an MU-RTS frame 802 in accordance with some embodiments. The MU-RTS frame 802 may be used to facilitate association to a Soft-AP. The MU-RTS frame 802 may include a frame control field 804, a duration field 806, a Receiver Address (RA) field 808, a Transmitter Address (TA) field 810, a common info field 812, a user info list field 814, a padding field 816, and a Frame Check Sequence (FCS) field 818. These fields may be used to convey information from the STA to the Soft-AP.

The frame control field 804 may carry control information related to the frame, such as the frame type and subtype. The Duration Field 806 specifies the duration of time for which the sender intends to reserve the wireless medium. It helps other devices understand how long the medium will be occupied for the transmission. The RA Field 808 may indicate the MAC address of the intended recipient or recipients of the MU-RTS frame. It specifies the destination(s) to which the transmission is directed. The TA Field 810 may contain the MAC address of the device that initiates the MU-RTS frame. It identifies the transmitter of the frame. The Common Info Field 812 may carry more configuration details including common information relevant to all intended recipients of the MU-RTS frame. The User Info List Field 814 may be used to include a list of individual user-specific information.

The Padding Field 816 provides additional bits, if required, that the STA may use to provide sufficient time for the Soft-AP to transition from the low-power listen mode to the fully-capable mode. The padding size may be set based on the transition duration specified in the Soft-AP IE.

The FCS Field 818 may provide error detection for the frame. It may contain a checksum or hash value calculated over the entire frame, including the headers and payload. The FCS may ensure the integrity of the frame during transmission and may aid in detecting any potential transmission errors. These fields collectively provide control, addressing, timing, and error detection information within an MU-RTS frame, facilitating efficient communication in wireless networks.

To prevent the issue of association failures and the eventual block-listing of a Soft-AP by a STA, embodiments may incorporate the following additions to the standards. The MU-RTS frame may be classified as a Class-1 frame. That is, the MU-RTS may be sent by a STA to an unassociated AP. The MU-RTS required bit in the Soft-AP IE may apply to any frame transmission from the STA. Accordingly, the STA may precede the transmission of any frame (data or management) to a Soft-AP with an MU-RTS frame with padding as specified in the Soft-AP IE.

In some embodiments, the MU-RTS frame 802 may include an association ID (AID) field 820. In some cases, the STA has not associated with the Soft-AP yet. In those cases, the STA does not have an AID assigned by the Soft-AP. In some embodiments, the AID is a required field in MU-RTS frame 802. Accordingly, a new AID may be defined to be used by an STA when sending an MU-RTS frame to an unassociated Soft-AP. The new AID may be any value that is not currently used. For example, the new AID field 820 may be set to a value (e.g., 2047) that is currently reserved.

In some embodiments, a new wake-up frame may be introduced. The wake-up frame may be sent by the STA to the Soft -AP before an uplink data transmission to indicate an impending data frame. There are several benefits to using a wake-up frame. For instance, the MU-RTS is a hardware generated control frame and hence cannot be supported by existing Wi-Fi STA devices without hardware changes. This means that legacy STA devices would not be able to support MU-RTS. An objective of some embodiments herein is to define a new management frame that can be leveraged by any STA device, without hardware changes, to awaken the fully-capable mode of Soft-AP.

A wake-up frame may provide several advantages. For example, it may be a management frame and hence can be protected (integrity protection / MAC header protection), unlike a control frame like the MU-RTS. Further, acknowledgement to a management frame may be sent by a device regardless of the current network allocation vector (NAV) setting or medium activity. This may result in very reliable ACK responses. Based on the receive capabilities of the low-power listen mode in the Soft-AP, the wake-up frame may be in non-high throughput (HT) duplicate format. The Soft-AP may indicate the requirement in the Soft-AP IE.

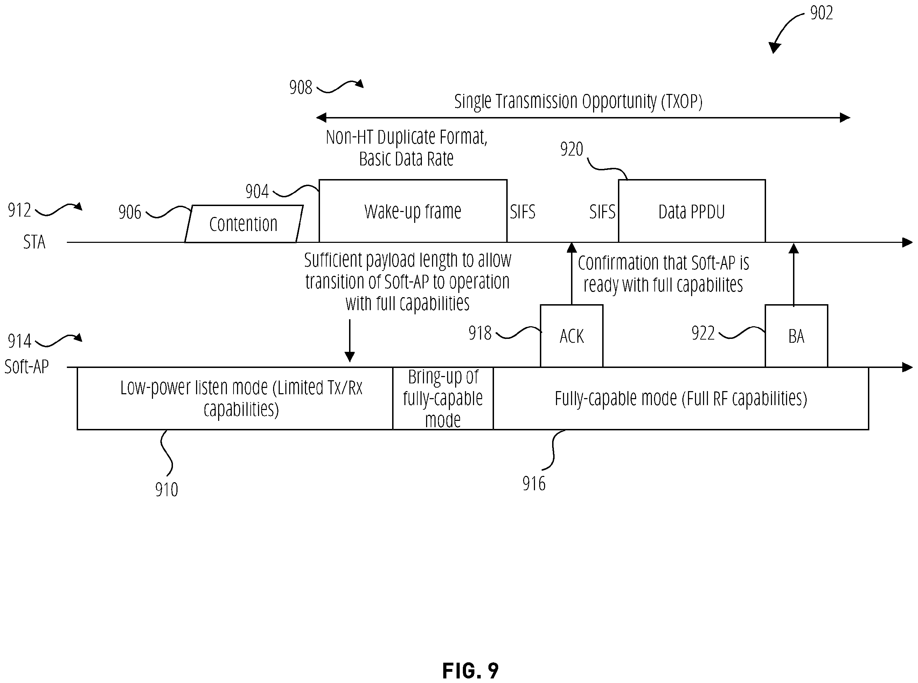

FIG. 9 illustrates an example frame exchange sequence 902 using a wake-up frame 904 in accordance with some embodiments. The Soft-AP 914 may have a baseline operation 910 where the low-power listen mode is active 914. The low-power listen mode may have limited or no transmission capabilities.

The STA 912 may contend 906 for a channel to transmit to the Soft-AP 914. When the STA 912 wins a channel, the STA 912 may send the wake-up frame 904 to the Soft-AP 914. The wake-up frame 904 may have a minimal data rate that may be understood using the low-power listen mode of the Soft-AP 914. For instance, in some embodiments the wake-up frame 904 may be in a non-HT duplicate format that is 6 megabits per second (Mbps) over one spatial stream. The wake-up frame 904 may have sufficient payload length to allow the Soft-AP 914 to transition from operating using the low-power listen mode to operating using the fully-capable mode with the full capabilities.

By the end of the wake-up frame 904, the Soft-AP 914 may have switched to fully-capable mode operation 916. The Soft-AP 914 may use the fully-capable mode to send an ACK message 918. The ACK message 918 may serve as a configuration that the Soft-AP 914 is ready with full RF capabilities. Once the ACK message 918 is received by the STA 912, the STA can continue with the data transmission (e.g., data frame 920). The Soft-AP 914 may send a BA 922 to the STA 912. The BA 922 may indicate to the STA 912 that the data frame 920 was successfully received. After a transmission/reception period using the fully-capable mode, the Soft-AP 914 may transition back to the low-power listen mode.

One benefit of the frame exchange sequence 902 using the wake-up frame 904 is that it occurs over a single transmission opportunity 908. Accordingly, the STA 912 may not have to contend for channels multiple times.

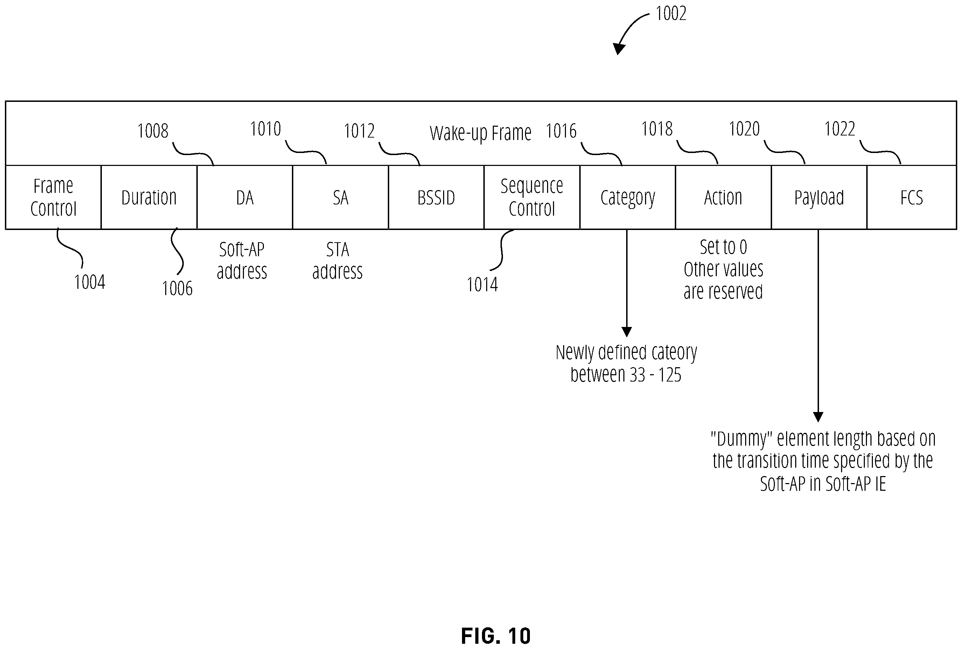

FIG. 10 illustrates an example wake-up frame format in accordance with some embodiments. As shown, the wake-up frame 1002 may include a frame control field 1004, a duration field 1006, a Destination Address (DA) field 1008, a Source Address (SA) field 1010, a Basic Service Set Identifier (BSSID) field 1012, a sequence control field 1014, a category field 1016, an action field 1018, a payload field 1020, and an FCS field 1022. The frame control field 1004 may include control and management information related to the frame. The duration field 1006 may indicate the duration of time for which the wireless medium is reserved during the transmission of the frame.

The DA field 1008 may identifies the intended destination device or devices for the wake-up frame 1002. For example, the DA field 1008 may include the MAC address of a target Soft-AP. The SA field 1010 may indicate the MAC address of the device that transmitted the management frame (e.g., the STA address). The BSSID field 1012 may denote a unique identifier associated with the Basic Service Set (BSS) to which the Wi-Fi device sending the frame belongs. The sequence control field 1014 may provide information related to the sequence number of the frame.

The category field 1016 may identify the frame as a wake-up frame 1002. The action field 1018 may be set to zero. The payload field 1020 may be a dummy element with a length based on the transition time specified by the Soft-AP in the Soft-AP IE. The length of the payload field 1020 may provide transition time for the Soft-AP to switch from using the low-power listen mode to the fully-capable mode. The FCS Field 1022 may provide error detection for the frame.

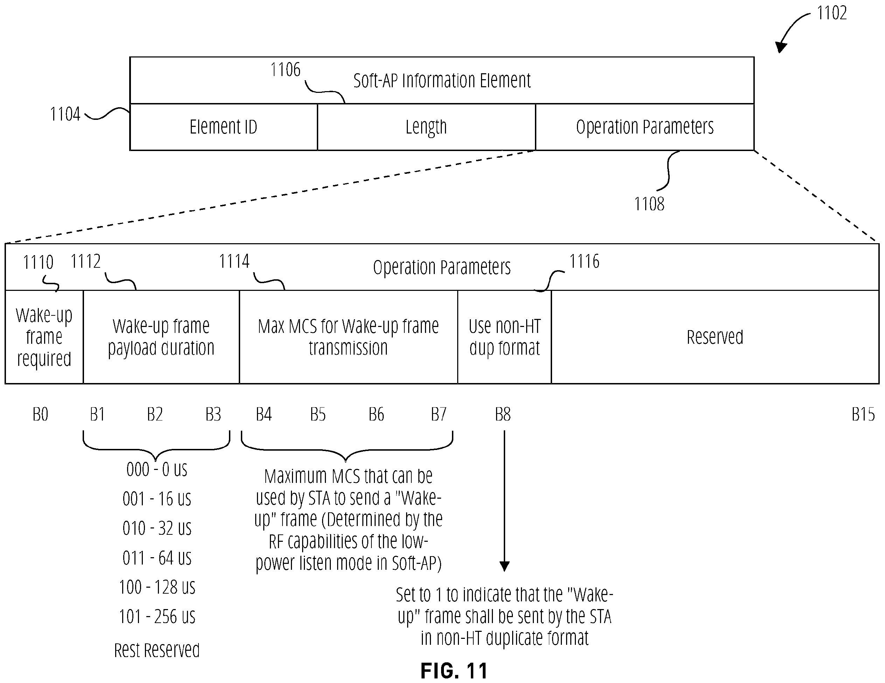

FIG. 11 illustrates an example Soft-AP IE 1102 for a wake-up frame configuration in accordance with some embodiments. The Soft-AP IE 1102 may be included in beacons, and/or probe responses. The Soft-AP IE 1102 may include an element ID 1104, a length field 1106, and operation parameters 1108.

The element ID 1104 may be used to uniquely identify the Soft-AP IE 1102. The element ID 1104 may be a numerical value assigned by the protocol specification. It may serve as a reference point for the sender and receiver to identify and interpret the specific information carried by the corresponding IE. The length field 1106 may be used to specify the size or length of the data carried by the Soft-AP IE 1102.

The operation parameters 1108 may include configuration information for parameters associated with a wake-up frame sent by an STA. For example, the operation parameters 1108 may include a wake-up frame required field 1110, a wake-up frame payload duration field 1112, a Max MCS for wake-up frame transmission field 1114, and a use non-HT duplicate format field 1116. The wake-up frame required field 1110 may be used by the Soft-AP to indicate whether the Soft-AP mandates that an STA always precedes its data transmission with a wake-up frame. The wake-up frame payload duration field 1112 may be used by the Soft-AP to specify a payload duration for the wake-up frame. The payload duration may be based on the time taken by the Soft-AP to bring-up fully-capable mode (e.g., the period of time to switch from the low-power listen mode to the fully-capable mode). The Max MCS for wake-up frame transmission field 1114 may indicate the Max MCS for the wake-up frame transmission. The use non-HT duplicate format field 1116 may indicate that the STA may use non-HT duplicate format to send the wake-up frame to the Soft-AP operating in the low-power listen mode.

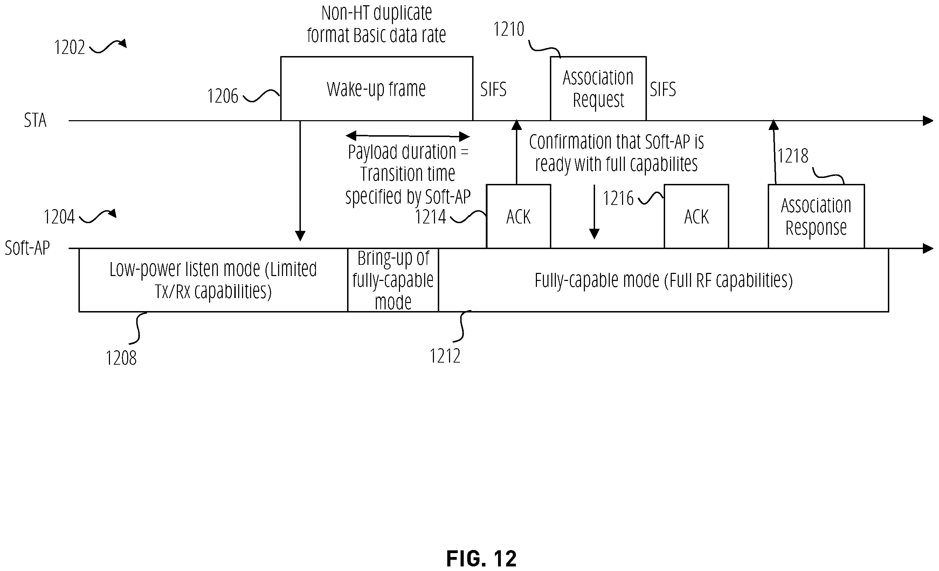

FIG. 12 illustrates an example scenario where a STA 1202 is in a pre-associated state and wants to associate with a Soft-AP 1204 in accordance with some embodiments. The wake-up frame 1206 may be leveraged to enable association of a STA 1202 to the Soft-AP 1204 operating in low-power listen mode 1208. In low-power listen mode 1208, the Soft-AP 1204 may have limited or no transmit capabilities, and the fully-capable mode of the Soft-AP 1204 with full RF capabilities may be deactivated.

The low-power listen mode may not have the capabilities to send an ACK frame which may lead to failures. For example, if the STA 1202 sends an association request without first sending the wake-up frame 1206, the Soft-AP 1204 may receive the association request with the active low-power listen mode, but the Soft-AP 1204 may not be able to reply with an ACK frame in the low-power listen mode. As the Soft-AP 704 may not be able to acknowledge the association request was successfully received from the STA 702, there is a risk of block-listing of Soft-AP 1204 by the STA 1202 because of association failure(s). Accordingly, embodiment herein may use the wake-up frame 1206 to circumvent the issue of association failures and the subsequent block-listing of Soft-AP 1204 by STA 1202.

As previously discussed, the Soft-AP 1204 may indicate requirements for the STA 1202 to transmit a wake-up frame 1206 before frame exchanges in beacons or probe responses using the Soft-AP IE. The STA 1202 would therefore be aware that the Soft-AP 1204 needs all frame exchanges to be initiated with a wake-up frame 1206. Accordingly, the STA 1202 may honor the Soft-AP IE requirements by sending the wake-up frame 1206 even for an association request 1210.

The wake-up frame 1206 may include a payload duration set to the transition time set in the Soft-AP IE (e.g., the wake-up frame payload duration field). The payload duration may provide sufficient time for the Soft-AP 1204 to enter a fully-capable mode 1212 with full RF capabilities. When the Soft-AP 1204 switches from the low-power listen mode to the fully-capable mode, the Soft-AP 1204 may use the fully-capable mode to transmit an ACK message 1214 to the STA 1202. The ACK message 1214 may provide the STA 1202 with confirmation that the Soft-AP has successfully transitioned from the low-power listen mode to the fully-capable mode, and the fully-capable mode of Soft-AP with full RF capabilities is active.

In response to receiving the ACK message 1214, the STA 1202 may send the association request 1210 to the Soft-AP 1204. The Soft-AP 1204 may receive and decode the association request 1210 using the fully-capable mode. The STA 1202 and the Soft-AP 1204 may proceed with the association procedure, including the Soft-AP 1204 sending an ACK message 1216 to indicate that the association request 1210 was successfully received, and sending an association response 1218 to the STA 1202.

To prevent the issue of association failures and the eventual block-listing of the Soft-AP 1204 by a STA 1202, embodiments may incorporate the following additions to the standards. The wake-up frame may be classified as a Class-1 frame. That is, the wake-up frame may be sent by a STA to an unassociated AP. The wake-up frame required bit in the Soft-AP IE may apply to any frame transmission from the STA 1202. Accordingly, the STA 1202 may precede the transmission of any frame (data or management) to the Soft-AP 1204 with a wake-up frame with a payload duration as specified in the Soft-AP IE. In some embodiments, the STA 1202 may proceed with the frame exchange sequence only after it receives an ACK from the Soft-AP 1204 in response to the wake-up frame.

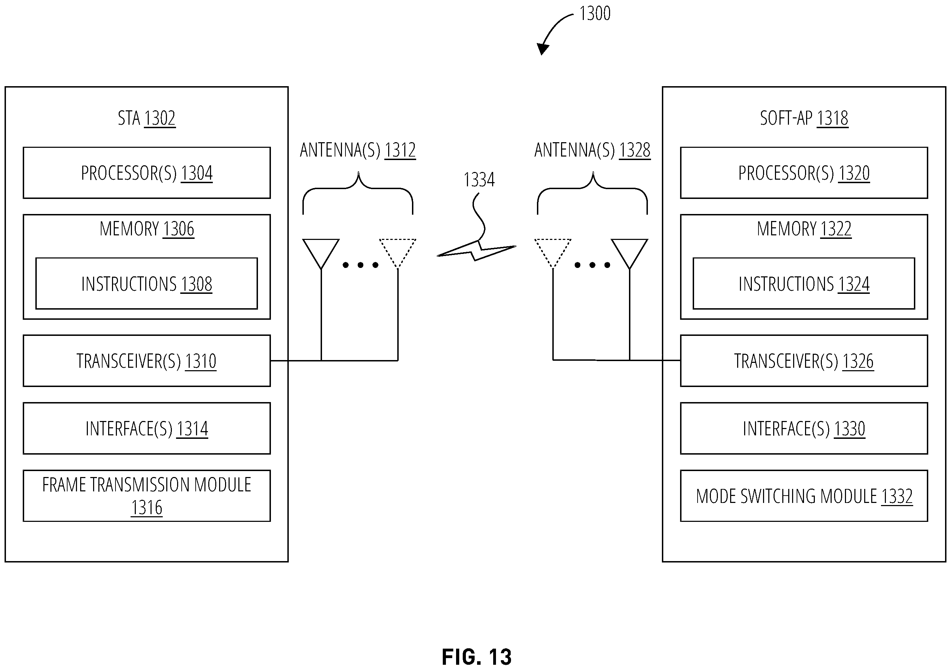

FIG. 13 illustrates a system 1300 for performing signaling 1334 between an STA 1302 and a Soft-AP 1318, according to embodiments disclosed herein. The system 1300 may be a portion of a wireless communications system as herein described. The STA 1302 may be, for example, a UE of a wireless communication system. The Soft-AP 1318 may be, for example, an access point of a wireless communication system.

The STA 1302 may include one or more processor(s) 1304. The processor(s) 1304 may execute instructions such that various operations of the STA 1302 are performed, as described herein. The processor(s) 1304 may include one or more baseband processors implemented using, for example, a central processing unit (CPU), a digital signal processor (DSP), an application specific integrated circuit (ASIC), a controller, a field programmable gate array (FPGA) device, another hardware device, a firmware device, or any combination thereof configured to perform the operations described herein.

The STA 1302 may include a memory 1306. The memory 1306 may be a non-transitory computer-readable storage medium that stores instructions 1308 (which may include, for example, the instructions being executed by the processor(s) 1304). The instructions 1308 may also be referred to as program code or a computer program. The memory 1306 may also store data used by, and results computed by, the processor(s) 1304.

The STA 1302 may include one or more transceiver(s) 1310 that may include radio frequency (RF) transmitter circuitry and/or receiver circuitry that use the antenna(s) 1312 of the STA 1302 to facilitate signaling (e.g., the signaling 1334) to and/or from the STA 1302 with other devices (e.g., the Soft-AP 1318).

The STA 1302 may include one or more antenna(s) 1312 (e.g., one, two, four, or more). For embodiments with multiple antenna(s) 1312, the STA 1302 may leverage the spatial diversity of such multiple antenna(s) 1312 to send and/or receive multiple different data streams on the same time and frequency resources. This behavior may be referred to as, for example, multiple input multiple output (MIMO) behavior (referring to the multiple antennas used at each of a transmitting device and a receiving device that enable this aspect). MIMO transmissions by the STA 1302 may be accomplished according to precoding (or digital beamforming) that is applied at the STA 1302 that multiplexes the data streams across the antenna(s) 1312 according to known or assumed channel characteristics such that each data stream is received with an appropriate signal strength relative to other streams and at a desired location in the spatial domain (e.g., the location of a receiver associated with that data stream). Certain embodiments may use single user MIMO (SU-MIMO) methods (where the data streams are all directed to a single receiver) and/or multi user MIMO (MU-MIMO) methods (where individual data streams may be directed to individual (different) receivers in different locations in the spatial domain).

In certain embodiments having multiple antennas, the STA 1302 may implement analog beamforming techniques, whereby phases of the signals sent by the antenna(s) 1312 are relatively adjusted such that the (joint) transmission of the antenna(s) 1312 can be directed (this is sometimes referred to as beam steering).

The STA 1302 may include one or more interface(s) 1314. The interface(s) 1314 may be used to provide input to or output from the STA 1302. For example, an STA 1302 that is a UE may include interface(s) 1314 such as microphones, speakers, a touchscreen, buttons, and the like in order to allow for input and/or output to the UE by a user of the UE. Other interfaces of such a UE may be made up of transmitters, receivers, and other circuitry (e.g., other than the transceiver(s) 1310/antenna(s) 1312 already described) that allow for communication between the UE and other devices and may operate according to known protocols (e.g., Wi-Fi^{®}, Bluetooth^{®}, and the like).

The STA 1302 may include a frame transmission module 1316. The frame transmission module 1316 may be implemented via hardware, software, or combinations thereof. For example, the frame transmission module 1316 may be implemented as a processor, circuit, and/or instructions 1308 stored in the memory 1306 and executed by the processor(s) 1304. In some examples, the frame transmission module 1316 may be integrated within the processor(s) 1304 and/or the transceiver(s) 1310. For example, the frame transmission module 1316 may be implemented by a combination of software components (e.g., executed by a DSP or a general processor) and hardware components (e.g., logic gates and circuitry) within the processor(s) 1304 or the transceiver(s) 1310.

The frame transmission module 1316 may be used for various aspects of the present disclosure, for example, aspects of FIGS. 2-12 and 15.

The Soft-AP 1318 may include one or more processor(s) 1320. The processor(s) 1320 may execute instructions such that various operations of the Soft-AP 1318 are performed, as described herein. The processor(s) 1320 may include one or more baseband processors implemented using, for example, a CPU, a DSP, an ASIC, a controller, an FPGA device, another hardware device, a firmware device, or any combination thereof configured to perform the operations described herein.

The Soft-AP 1318 may include a memory 1322. The memory 1322 may be a non-transitory computer-readable storage medium that stores instructions 1324 (which may include, for example, the instructions being executed by the processor(s) 1320). The instructions 1324 may also be referred to as program code or a computer program. The memory 1322 may also store data used by, and results computed by, the processor(s) 1320.

The Soft-AP 1318 may include one or more transceiver(s) 1326 that may include RF transmitter circuitry and/or receiver circuitry that use the antenna(s) 1328 of the Soft-AP 1318 to facilitate signaling (e.g., the signaling 1334) to and/or from the Soft-AP 1318 with other devices (e.g., the STA 1302).

The Soft-AP 1318 may include one or more antenna(s) 1328 (e.g., one, two, four, or more). In embodiments having multiple antenna(s) 1328, the Soft-AP 1318 may perform MIMO, digital beamforming, analog beamforming, beam steering, etc., as has been described.

The Soft-AP 1318 may include one or more interface(s) 1330. The interface(s) 1330 may be used to provide input to or output from the Soft-AP 1318. For example, a Soft-AP 1318 that is a base station may include interface(s) 1330 made up of transmitters, receivers, and other circuitry (e.g., other than the transceiver(s) 1326/antenna(s) 1328 already described) that enables the base station to communicate with other equipment in a core network, and/or that enables the base station to communicate with external networks, computers, databases, and the like for purposes of operations, administration, and maintenance of the base station or other equipment operably connected thereto.

The Soft-AP 1318 may include a mode switching module 1332. The mode switching module 1332 may be implemented via hardware, software, or combinations thereof. For example, the mode switching module 1332 may be implemented as a processor, circuit, and/or instructions 1324 stored in the memory 1322 and executed by the processor(s) 1320. In some examples, the mode switching module 1332 may be integrated within the processor(s) 1320 and/or the transceiver(s) 1326. For example, the mode switching module 1332 may be implemented by a combination of software components (e.g., executed by a DSP or a general processor) and hardware components (e.g., logic gates and circuitry) within the processor(s) 1320 or the transceiver(s) 1326.

The mode switching module 1332 may be used for various aspects of the present disclosure, for example, aspects of 2-12 and 14. For example, the mode switching module 1332 may switch between a low-power listen mode and a fully-capable mode.

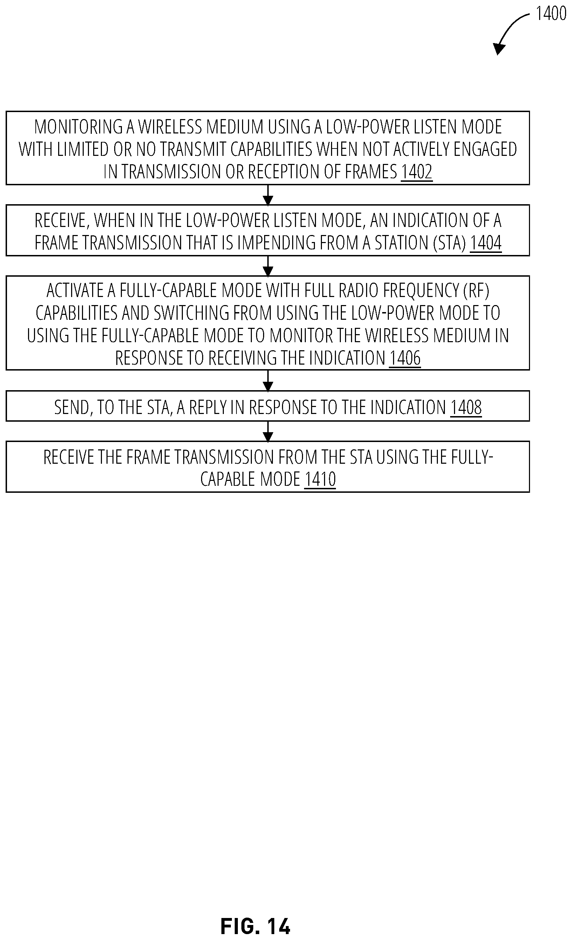

FIG. 14 illustrates an example method 1400 for a Soft-AP in accordance with some embodiments. In the illustrated embodiment, the method 1400 includes monitoring 1402 a wireless medium using a low-power listen mode with limited or no transmit capabilities when not actively engaged in transmission or reception of frames. The method 1400 further includes receiving 1404, when in the low-power listen mode, an indication of a frame transmission that is impending from a STA. The method 1400 further includes activating 1406 a fully-capable mode with full RF capabilities and switching from using the low-power mode to using the fully-capable mode to monitor the wireless medium in response to receiving the indication. The method 1400 further includes sending 1408, to the STA, a reply in response to the indication. The method 1400 further includes receiving 1410 the frame transmission from the STA using the fully-capable mode.

In some embodiments of the method 1400, the indication from the STA comprises a Multi-User Request-to-Send (MU-RTS) frame.

In some embodiments of the method 1400, the reply to the indication comprises a CTS message sent in the low-power listen mode in parallel with activation of the fully-capable mode.

In some embodiments of the method 1400, the MU-RTS frame comprises sufficient padding to allow the Soft-AP to activate the fully-capable mode prior to an end of the MU-RTS frame, and wherein the reply to the indication comprises a CTS message sent using the fully-capable mode.

In some embodiments, the method 1400 further comprises sending a Soft-AP information element to the STA that includes a first field that mandates that the STA precedes data transmissions with the MU-RTS frame, a second field that indicates a padding duration for the MU-RTS frame, and a third field that indicates a maximum MCS for transmission of the MU-RTS frame.

In some embodiments, the method 1400 further comprises receiving an association request using the low-power listen mode, and transmitting an acknowledgement message using the low-power listen mode.

In some embodiments, the method 1400 further comprises receiving the MU-RTS frame before receiving an association request.

In some embodiments of the method 1400, the indication from the STA comprises a wake-up frame, and wherein the wake-up frame is a management frame.

In some embodiments of the method 1400, the wake-up frame comprises sufficient payload length to allow the Soft-AP to activate the fully-capable mode prior to an end of the wake-up frame, and wherein the reply to the indication comprises an acknowledgement message sent using the fully-capable mode.

In some embodiments, the method 1400 further comprises sending a Soft-AP information element to the STA that includes a first field that mandates that the STA precedes data transmissions with the wake-up frame, a second field that indicates a payload duration for the wake-up frame, a third field that indicates a maximum MCS for transmission of the wake-up frame, and a fourth field that indicates to the STA to use a non-HT duplicate format.

In some embodiments, the method 1400 further comprises receiving the wake-up frame before receiving an association request.

Embodiments contemplated herein include an apparatus comprising means to perform one or more elements of the method 1400. This apparatus may be, for example, an apparatus of an AP (such as a Soft-AP 1318, as described herein).

Embodiments contemplated herein include one or more non-transitory computer-readable media comprising instructions to cause an electronic device, upon execution of the instructions by one or more processors of the electronic device, to perform one or more elements of the method 1400. This non-transitory computer-readable media may be, for example, a memory of an AP (such as a memory 1322 of a Soft-AP 1318, as described herein).

Embodiments contemplated herein include an apparatus comprising logic, modules, or circuitry to perform one or more elements of the method 1400. This apparatus may be, for example, an apparatus of an AP (such as a Soft-AP 1318, as described herein).

Embodiments contemplated herein include an apparatus comprising: one or more processors and one or more computer-readable media comprising instructions that, when executed by the one or more processors, cause the one or more processors to perform one or more elements of the method 1400. This apparatus may be, for example, an apparatus of an AP (such as a Soft-AP 1318, as described herein).

Embodiments contemplated herein include a signal as described in or related to one or more elements of the method 1400.

Embodiments contemplated herein include a computer program or computer program product comprising instructions, wherein execution of the program by a processing element is to cause the processing element to carry out one or more elements of the method 1400. The processor may be a processor of an AP (such as a processor(s) 1320 of a Soft-AP 1318, as described herein). These instructions may be, for example, located in the processor and/or on a memory of the AP (such as a memory 1322 of a Soft-AP 1318, as described herein).

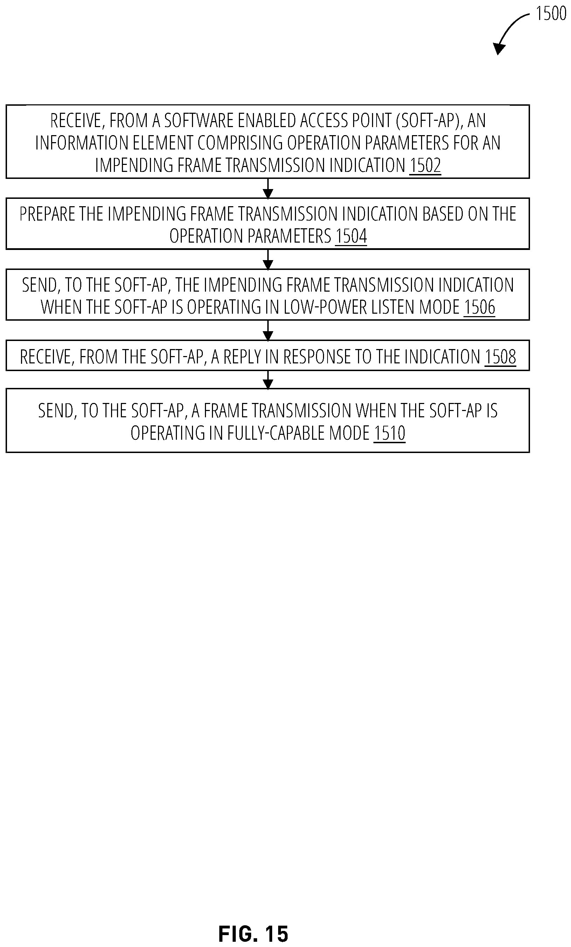

FIG. 15 illustrates an example method 1500 for a STA in accordance with some embodiments. In the illustrated embodiment, the method 1500 includes receiving 1502, from a Soft-AP, an information element comprising operation parameters for an impending frame transmission indication. The method 1500 further includes preparing 1504 the impending frame transmission indication based on the operation parameters. The method 1500 further includes sending 1506, to the Soft-AP, the impending frame transmission indication when the Soft-AP is operating in low-power listen mode. The method 1500 further includes receiving 1508, from the Soft-AP, a reply in response to the indication. The method 1500 further includes sending 1510, to the Soft-AP, a frame transmission when the Soft-AP is operating in fully-capable mode.

In some embodiments of the method 1500, the impending frame transmission indication comprises a MU-RTS frame.

In some embodiments of the method 1500, the reply to the impending frame transmission indication comprises a CTS message sent by the Soft-AP using the low-power listen mode in parallel with the Soft-AP activating the fully-capable mode.

In some embodiments of the method 1500, the MU-RTS frame comprises sufficient padding to allow the Soft-AP to activate the fully-capable mode prior to an end of the MU-RTS frame, and wherein the reply to the indication CTS message sent by the fully-capable mode.

In some embodiments of the method 1500, the information element includes a first field that mandates that the STA precedes data transmissions with the MU-RTS frame, a second field that indicates a padding duration for the MU-RTS frame, and a third field that indicates a maximum MCS for transmission of the MU-RTS frame.

In some embodiments, the method 1500 further comprises sending an association request to the Soft-AP operating in the low-power listen mode, and receiving an acknowledgement message from the Soft-AP operating in the low-power listen mode.

In some embodiments, the method 1500 further comprises sending the MU-RTS frame before sending an association request.

In some embodiments of the method 1500, the impending frame transmission indication comprises a wake-up frame, and wherein the wake-up frame is a management frame.

In some embodiments of the method 1500, the wake-up frame comprises sufficient payload length to allow the Soft-AP to activate the fully-capable mode prior to an end of the wake-up frame, and wherein the reply to the indication comprises an acknowledgement message sent using the fully-capable mode of the Soft-AP.

In some embodiments of the method 1500, the information element includes a first field that mandates that the STA precedes data transmissions with the wake-up frame, a second field that indicates a payload duration for the wake-up frame, a third field that indicates a maximum MCS for transmission of the wake-up frame, and a fourth field that indicates to the STA to use a non-HT duplicate format.

In some embodiments, the method 1500 further comprises sending the wake-up frame before sending an association request.

Embodiments contemplated herein include an apparatus comprising means to perform one or more elements of the method 1500. This apparatus may be, for example, an apparatus of a STA (such as STA 1302, as described herein).

Embodiments contemplated herein include one or more non-transitory computer-readable media comprising instructions to cause an electronic device, upon execution of the instructions by one or more processors of the electronic device, to perform one or more elements of the method 1500. This non-transitory computer-readable media may be, for example, a memory of a STA (such as a memory 1306 of an STA 1302, as described herein).

Embodiments contemplated herein include an apparatus comprising logic, modules, or circuitry to perform one or more elements of the method 1500. This apparatus may be, for example, an apparatus of a STA (such as an STA 1302, as described herein).

Embodiments contemplated herein include an apparatus comprising: one or more processors and one or more computer-readable media comprising instructions that, when executed by the one or more processors, cause the one or more processors to perform one or more elements of the method 1500. This apparatus may be, for example, an apparatus of a STA (such as an STA 1302, as described herein).

Embodiments contemplated herein include a signal as described in or related to one or more elements of the method 1500.

Embodiments contemplated herein include a computer program or computer program product comprising instructions, wherein execution of the program by a processor is to cause the processor to carry out one or more elements of the method 1500. The processor may be a processor of a STA (such as a processor(s) 1304 of an STA 1302, as described herein). These instructions may be, for example, located in the processor and/or on a memory of the STA (such as a memory 1306 of an STA 1302, as described herein).

For one or more embodiments, at least one of the components set forth in one or more of the preceding figures may be configured to perform one or more operations, techniques, processes, and/or methods as set forth herein. For example, a processor as described herein in connection with one or more of the preceding figures may be configured to operate in accordance with one or more of the examples set forth herein. For another example, circuitry associated with a STA or AP as described above in connection with one or more of the preceding figures may be configured to operate in accordance with one or more of the examples set forth herein.

Any of the above-described embodiments may be combined with any other embodiment (or combination of embodiments), unless explicitly stated otherwise. The foregoing description of one or more implementations provides illustration and description but is not intended to be exhaustive or to limit the scope of embodiments to the precise form disclosed. Modifications and variations are possible in light of the above teachings or may be acquired from practice of various embodiments.

Embodiments and implementations of the systems and methods described herein may include various operations, which may be embodied in machine-executable instructions to be executed by a computer system. A computer system may include one or more general-purpose or special-purpose computers (or other electronic devices). The computer system may include hardware components that include specific logic for performing the operations or may include a combination of hardware, software, and/or firmware.

It should be recognized that the systems described herein include descriptions of specific embodiments. These embodiments can be combined into single systems, partially combined into other systems, split into multiple systems or divided or combined in other ways. In addition, it is contemplated that parameters, attributes, aspects, etc. of one embodiment can be used in another embodiment. The parameters, attributes, aspects, etc. are merely described in one or more embodiments for clarity, and it is recognized that the parameters, attributes, aspects, etc. can be combined with or substituted for parameters, attributes, aspects, etc. of another embodiment unless specifically disclaimed herein.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Although the foregoing has been described in some detail for purposes of clarity, it will be apparent that certain changes and modifications may be made without departing from the principles thereof. It should be noted that there are many alternative ways of implementing both the processes and apparatuses described herein. Accordingly, the present embodiments are to be considered illustrative and not restrictive, and the description is not to be limited to the details given herein, but may be modified within the scope and equivalents of the appended claims.

Further disclosure is provided in the following numbered clauses.
1. A method for a software enabled access point (Soft-AP), the method comprising: monitoring a wireless medium using a low-power listen mode with limited or no transmit capabilities when not actively engaged in transmission or reception of frames; receiving, when in the low-power listen mode, an indication of a frame transmission that is impending from a station (STA); activating a fully-capable mode with full radio frequency (RF) capabilities and switching from using the low-power mode to using the fully-capable mode to monitor the wireless medium in response to receiving the indication; sending, to the STA, a reply in response to the indication; and receiving the frame transmission from the STA using the fully-capable mode.
2. The method of clause 1, wherein the indication from the STA comprises a Multi-User Request-to-Send (MU-RTS) frame.
3. The method of clause 2, wherein the reply to the indication comprises a clear-to-send (CTS) message sent in the low-power listen mode in parallel with activation of the fully- capable mode.
4. The method of clause 2 or claim 3, wherein the MU-RTS frame comprises sufficient padding to allow the Soft-AP to activate the fully-capable mode prior to an end of the MU-RTS frame, and wherein the reply to the indication comprises a clear-to-send (CTS) message sent using the fully-capable mode.
5. The method of any of clauses 2 to 4, further comprising sending a Soft-AP information element to the STA that includes a first field that mandates that the STA precedes data transmissions with the MU-RTS frame, a second field that indicates a padding duration for the MU-RTS frame, and a third field that indicates a maximum modulation and coding schemes (MCS) for transmission of the MU-RTS frame.
6. The method of any of clauses 2 to 5, further comprising receiving an association request using the low-power listen mode, and transmitting an acknowledgement message using the low- power listen mode.
7. The method of any of clauses 2 to 6, further comprising receiving the MU-RTS frame before receiving an association request.
8. The method of any preceding clause, wherein the indication from the STA comprises a wake-up frame, and wherein the wake-up frame is a management frame.
9. The method of clause 8, wherein the wake-up frame comprises sufficient payload length to allow the Soft-AP to activate the fully-capable mode prior to an end of the wake-up frame, and wherein the reply to the indication comprises an acknowledgement message sent using the fully-capable mode.
10. The method of clause 8 or clause 9, further comprising sending a Soft-AP information element to the STA that includes a first field that mandates that the STA precedes data transmissions with the wake-up frame, a second field that indicates a payload duration for the wake-up frame, a third field that indicates a maximum modulation and coding schemes (MCS) for transmission of the wake-up frame, and a fourth field that indicates to the STA to use a non-high throughput (HT) duplicate format.
11. The method of any of clauses 8 to 10, further comprising receiving the wake-up frame before receiving an association request.
12. A method for a station (STA), the method comprising: receiving, from a software enabled access point (Soft-AP), an information element comprising operation parameters for an impending frame transmission indication; preparing the impending frame transmission indication based on the operation parameters; sending, to the Soft-AP, the impending frame transmission indication; receiving, from the Soft-AP, a reply in response to the indication when the Soft- AP is operating in a low-power listen mode; and sending, to the Soft-AP, a frame transmission when the Soft-AP is operating in a fully-capable mode.
13. The method of clause 12, wherein the impending frame transmission indication comprises a Multi-User Request-to-Send (MU-RTS) frame.
14. The method of clause 13, wherein the reply to the impending frame transmission indication comprises a clear-to-send (CTS) message sent by the Soft-AP using the low- power listen mode in parallel with the Soft-AP activating the fully-capable mode.
15. The method of clause 13 or clause 14, wherein the MU-RTS frame comprises sufficient padding to allow the Soft-AP to activate the fully-capable mode prior to an end of the MU-RTS frame, and wherein the reply to the indication comprises a clear-to-send (CTS) message sent by the fully-capable mode.
16. The method of any of clauses 13 to 15, wherein the information element includes a first field that mandates that the STA precedes data transmissions with the MU-RTS frame, a second field that indicates a padding duration for the MU-RTS frame, and a third field that indicates a maximum modulation and coding schemes (MCS) for transmission of the MU-RTS frame.
17. The method of any of clauses 13 to 16, further comprising sending an association request to the Soft-AP operating in the low-power listen mode, and receiving an acknowledgement message from the Soft-AP operating in the low-power listen mode.
18. The method of any of clauses 13 to 17, further comprising sending the MU-RTS frame before sending an association request.
19. The method of any of clauses 12 to 18, wherein the impending frame transmission indication comprises a wake-up frame, and wherein the wake-up frame is a management frame.
20. The method of clause 19, wherein the wake-up frame comprises sufficient payload length to allow the Soft-AP to activate the fully-capable mode prior to an end of the wake-up frame, and wherein the reply to the indication comprises an acknowledgement message sent using the fully-capable mode of the Soft-AP.
21. The method of clause 19 or clause 20, wherein the information element includes a first field that mandates that the STA precedes data transmissions with the wake-up frame, a second field that indicates a payload duration for the wake-up frame, a third field that indicates a maximum modulation and coding schemes (MCS) for transmission of the wake-up frame, and a fourth field that indicates to the STA to use a non-high throughput (HT) duplicate format.
22. The method of any of clauses 19 to 21, further comprising sending the wake-up frame before sending an association request.
23. An apparatus comprising means to perform the method of any of clause 1 to clause 22.
24. A computer-readable media comprising instructions to cause an electronic device, upon execution of the instructions by one or more processors of the electronic device, to perform the method of any of clause 1 to clause 22.
25. An apparatus comprising logic, modules, or circuitry to perform the method of any of clause 1 to clause 22.
26. A method comprising one or more operations corresponding to a software enabled access point (Soft-AP), as disclosed herein.
27. A method comprising one or more operations corresponding to a station (STA), as disclosed herein.
28. A device configured to interact with a software enabled access point (Soft-AP) in accordance with one or more operations disclosed herein.
29. A device configured to interact with a station (STA) in accordance with one or more operations disclosed herein.

## Claims

1. A method for a software enabled access point, Soft-AP, the method comprising:
monitoring a wireless medium using a low-power listen mode with limited or no transmit capabilities when not actively engaged in transmission or reception of frames;
receiving, when in the low-power listen mode, an indication of a frame transmission that is impending from a station, STA;
activating a fully-capable mode with full radio frequency, RF, capabilities and switching from using the low-power mode to using the fully-capable mode to monitor the wireless medium in response to receiving the indication;
sending, to the STA, a reply in response to the indication; and
receiving the frame transmission from the STA using the fully-capable mode.

2. The method of claim 1, wherein the indication from the STA comprises a Multi-User Request-to-Send, MU-RTS, frame.

3. The method of claim 2, wherein the reply to the indication comprises a clear-to-send, CTS, message sent in the low-power listen mode in parallel with activation of the fully-capable mode.

4. The method of claim 2 or claim 3, wherein the MU-RTS frame comprises sufficient padding to allow the Soft-AP to activate the fully-capable mode prior to an end of the MU-RTS frame, and wherein the reply to the indication comprises a clear-to-send, CTS, message sent using the fully-capable mode.

5. The method of any of claims 2 to 4, further comprising sending a Soft-AP information element to the STA that includes a first field that mandates that the STA precedes data transmissions with the MU-RTS frame, a second field that indicates a padding duration for the MU-RTS frame, and a third field that indicates a maximum modulation and coding schemes, MCS, for transmission of the MU-RTS frame.

6. The method of any of claims 2 to 5, further comprising receiving an association request using the low-power listen mode, and transmitting an acknowledgement message using the low-power listen mode.

7. The method of any of claims 2 to 6, further comprising receiving the MU-RTS frame before receiving an association request.

8. The method of any preceding claim, wherein the indication from the STA comprises a wake-up frame, and wherein the wake-up frame is a management frame.

9. The method of claim 8, wherein the wake-up frame comprises sufficient payload length to allow the Soft-AP to activate the fully-capable mode prior to an end of the wake-up frame, and wherein the reply to the indication comprises an acknowledgement message sent using the fully-capable mode.

10. The method of claim 8 or claim 9, further comprising sending a Soft-AP information element to the STA that includes a first field that mandates that the STA precedes data transmissions with the wake-up frame, a second field that indicates a payload duration for the wake-up frame, a third field that indicates a maximum modulation and coding schemes, MCS, for transmission of the wake-up frame, and a fourth field that indicates to the STA to use a non-high throughput, HT, duplicate format.

11. The method of any of claims 8 to 10, further comprising receiving the wake-up frame before receiving an association request.

12. A method for a station, STA, the method comprising:
receiving, from a software enabled access point, Soft-AP, an information element comprising operation parameters for an impending frame transmission indication;
preparing the impending frame transmission indication based on the operation parameters;
sending, to the Soft-AP, the impending frame transmission indication;
receiving, from the Soft-AP, a reply in response to the indication when the Soft-AP is operating in a low-power listen mode; and
sending, to the Soft-AP, a frame transmission when the Soft-AP is operating in a fully-capable mode.

13. The method of claim 12, wherein the impending frame transmission indication comprises a Multi-User Request-to-Send, MU-RTS, frame.

14. An apparatus comprising means to perform the method of any of claim 1 to claim 13.

15. A computer-readable media comprising instructions to cause an electronic device, upon execution of the instructions by one or more processors of the electronic device, to perform the method of any of claim 1 to claim 13.
